# EUROPEAN PATENT APPLICATION

(11) **EP 1 736 649 A1**
(43) Date of publication of application: **27.12.2006**
(21) Application number: 03817812.5
(22) Date of filing: 01.08.2003
(51) Int. Cl.: F02C 3/32

(54) **METHOD FOR CONVERTING LOW-GRADE ENERGY AND A FUELLESS JET ENGINE FOR CARRYING OUT SAID METHOD**

(71) Applicant: Kondrashov, Boris Mihailovich, Moscow, 121359 (RU); Sapargaliev, Galim Gabbasovich, Almaty 050004 (KZ)
(72) Inventor: Boris Mihailovich Kondrashov, Moscow 121359 (RU)
(74) Representative: Smirnov, Alexander
(86) International application number: PCT/RU2003/000343
(87) International publication number: WO 2005/012709

(57) **Abstract**

The invention can be used for converting atmospheric energy and low-grade heat of environmental thermal energy sources, for example water of natural water reservoirs into mechanical work, high-grade heat and cold. The inventive energy conversion method consists in using a working body in the form of a compressed gas which is formed during the flow out of the gaseous mass of an active pulsed jet from the jet unit of an ejector nozzle block when a process for successively attaching additional masse used for producing a jet engine (I) power is carried out. Said gas is compressed in a compressor to a calculated level by means of a part of power which is produced on the power shaft of said engine by converting external gaseous masses at the previous cycles. Said invention is directed at ecological property improvement.

## Description

The invention claimed is related to methods for converting energy provided by alternative sources, as well as power plants and engines for their implementation.

The invention claimed can be used in processes of converting gravitational and low-grade thermal energy of environment into mechanical work, high-grade heat and "cold".

State of the art in the field of invention is characterized by using this kind of energy in wind-power engineering, ejector processes and jet engines.

Non-uniform heating of atmospheric gases compressed under the influence of gravitation, and accumulating the energy of the Sun, brings about changes of pressure in the atmosphere, while upsetting its equilibrium state. With the equilibrium restored, the potential and thermal energy of air masses are converted into the kinetic one. This natural stochastic process involves conversion of atmospheric energy into the kind of energy available for application. The first machine to use the results of the conversion for doing useful work was a sail. The operating principle of a sail and wind engines lies in creation of moment through using pressure of air mass. Their advantage over thermal engines is ability to do mechanic work with no oxygen consumed, and no combustion products generated, though they also have disadvantages - low energy density per unit of effective area and inability to control changes of wind direction.

It is possible to upset equilibrium state of the atmosphere for converting potential energy of air masses into kinetic energy by means of controllable local actions independent of global natural processes. Jet ejector devices used to control the process of creating the required pressure potential differences between their open thermodynamic system and the atmosphere have also been known for a long time. With the equilibrium state, upset under the effect of the active jet of working medium, restored, the atmosphere would do mechanical work, its amount determined by the magnitude and way of action, and also by parameters of ejector devices involved. Thus, raising the thrust of jet engines requires two processes of adding extra air masses to the active jet, with their ways of jet action being different. As a result, one of the principal indicators of energy conversion efficiency in such processes - the ratio of adding extra masses ***m,*** which characterizes relation of the added water mass to the mass of the active jet - may vary several-fold. In the traditional ejection process, i.e. parallel adding to the stationary jet, with an ejector shroud mounted on the jet engine, its thrust is increased due to an "unbalanced force of external pressure exerted on the inlet spigot (intake) of the ejector, this force caused by a pressure drop on the walls of the spigot, with the ejected air flowing into it" (Applied gas dynamics, Abramovich G.N., Nauka, Moscow, 1969 - p. 505), with no extra energy and fuel consumed. The efficiency ratio and ***m*** of this process are low because of turbulent mixing and friction of the streams, with the speed of the active jet ***C_{AC} -*** reduced. Therefore, an increase of thrust of the ejector device and that of the kinetic energy of the jet mass obtained as a result of parallel addition, are insignificant. Another process - that of successive addition (Phenomenon of anomalously high increase of thrust in gas ejection process with an active pulsed jet, discovery of July 02, 1951, diploma 314., authors: Kudrin O.I., Kvasnikov A.V., Chelomey V.N.) - may seem similar to ejection in terms of operating principle of the ejector device used for its implementation and in its outward resulting action. However, its physical nature is different and is not necessarily related to friction and mixing of streams. This process involves creating rarefaction and unbalanced force of atmospheric pressure in the ejector shroud of a composite jet nozzle, under the effect of an active pulsed jet, that force being responsible for addition of atmospheric air, mostly between the pulses of the active jet. Acceleration of atmospheric air can virtually occur without mixing of the joined masses or decreasing the speed of the active jet flowing with expansion to the area of the shroud with low pressure. It results in a sharp increase of the jet mass and its kinetic energy, compared to kinetic energy of the active jet.

The joined jet mass obtained as a result of the successive addition process will now be expressed as ***OM=l* +** ***m**,*
where ***l*** is mass of the active pulsed jet; ***m*** is the added mass, its value equal to ***m***.

Efficiency of this process (along with addition ratio ***m***) determines the ratio of speed of the joined jet mass ***w_{OM}***⁼***C_{OM}*/*C_{PC}***,
where ***C_{OM}*** is speed of the joined jet mass; ***C_{PC}*** is speed of the pulsed jet formed by the working medium of the same parameters, and flowing out of the same jet device, as was used in the addition process, yet expanding not in the ejector shroud, but in the shroud of a composite nozzle, which (though being of the same diameter) is so short, that no rarefaction is formed in it following the gaseous mass of pulses of the working medium jet, i.e. the working medium would expand at the atmospheric pressure.

***C_{OM}*** is equal to ***C_{AC},*** with ***C_{AC}*** being either ≤ or ≥ ***C_{OM}* -** (depending on the value of losses caused by friction and pressure change at the ejector shroud inlet). Therefore, ***C_{PC}*** may be ≤ or ≥ ***C_{PC},*** and ***w_{OM} ≤*** 1 or ≥ 1.

Successive inflow of additional masses following the gaseous mass of the active jet pulses, without their being pushed out of the ejector shroud by the gaseous mass of the next cycle pulse and without turbulent mixing of divided gaseous masses, is only possible within a narrow range of optimum values and relations of the process principal parameters (calculated frequency, shape, duration and speed of the active jet pulses, speed of the incident flow, as well as relation of design parameters and proportions of the jet device and its ejector shroud), which allow obtaining ***C_{AC} ≥ C_{PC}, w_{OM} ≥*** 1, with ***m** ≥* 10.

Methods, which are the closest to the proposed method for converting low-grade energy and a fuelless engine for its implementation (on the aggregate of substantial criteria) are the "Method for converting energy in a jet plant (variants), jet-adaptive engine and gas generator" described in Patent 2188960 RU F 02 C 3/32, 5/12, Bull. No. 25, 2002, author: Kondrashov B.M.. The process of successive addition of masses is used in this method for generating power on the shaft of a jet engine with an ejector nozzle device and a working medium obtained at combustion of the air-fuel mixture. This process comprises two interdependent, successive and recurrent thermodynamic cycles using different sources of energy to be converted into the kinetic energy of the joined jet mass for doing mechanical work. In the first cycle (***V = const***), the available energy of the fuel introduced into the engine is converted into the thermal one, and further on, into the kinetic energy of the working medium - of the first part of the jet mass, which, while moving with a supersonic speed in the ejector shroud, leaves behind rarefaction required for launching the second cycle, and while affecting the turbine blades - creates a moment on the shaft. Due to the pressure difference created in the first cycle, the main source of energy in the second cycle will be the energy of atmospheric air compressed under the effect of gravitation (which would also take place at restoring the atmospheric equilibrium in the natural stochastic process), which inflows, expands and accelerates in the shroud with a temperature decrease and, while flowing out of the shroud, forms the second part of the jet force acting on the blades. With the air added accelerated, the pressure in the shroud goes down before the beginning of the next first cycle, which increases the difference of pressure potentials at expanding the mass of the active jet's next pulse and, accordingly, increases kinetic energy of this mass, compared to its outflow into the area of atmospheric pressure. As the speed of the pulse mass of the active jet increases, so do the extent of rarefaction in the shroud in the next second cycle and the speed of the atmospheric air added in it. Thus, changing parameters of the process of converting energy of one source affects efficiency of converting energy of the other source over the next cycle.

Therefore, periodical creation of a difference of pressure potentials in the ejector shroud (due to the effect of a pulsed active jet upsetting the atmospheric equilibrium) makes possible to use atmospheric pressure not only for accelerating extra air masses added in process of successive addition, but also for raising kinetic energy of the active jet (that is the main difference of this process from parallel addition, where kinetic energy of the stationary ejector stream is reduced due to redistribution of its initial kinetic energy per a larger mass of gas during turbulent mixing).

Implementation of the method with combustion products used as the working medium takes place in the following way. In process of combustion of the air-fuel mixture in the periodical combustion chamber, the potential energy of combustion products is growing. With these products flowing, e.g., out of narrowing jet nozzles and expanding in ejector shrouds of the nozzle device following the gaseous mass of each pulse of the active jet of combustion products, rarefaction is created, which forms in each cycle a potential difference required for the additional mass of atmospheric air to inflow and accelerate in the shroud. As a result of this discrete process, the ejector nozzle device releases an outflow of jets of the joined mass comprising combustion products and the added air mass, which (with no extra fuel consumed) increases the jet mass affecting the turbine blades and the moment on the shaft of the jet engine rotor. Therefore, this method allows obtaining as much power as from using conventional gas-turbine engines, with the amount of fuel consumed being smaller, at least, by a number of times in proportion to ***m*** adjusted by the value of ***w_{OM}.***

In the method in question, the pressure of combustion products in the chamber decreases after they start flowing out of the periodic combustion chamber intended for the mass of a single pulse. Therefore, pressure at the throat of the nozzle, degree of expansion of the gaseous mass "tail" part in the first cycle and its speed, accordingly, go down. It results in a progressing decrease in the degree of rarefaction in the shroud and deceleration of a part of the mass added. The "head" part of the pulse of the next cycle combustion products pushes the "tail" part of the added air mass of the previous cycle (which has a lower speed) out of the shroud. This brings about partial mixing of divided gaseous masses and, accordingly, reduction of ***C_{AC}*** and ***C_{OM},*** which makes the addition process less efficient.

However, the results of bench tests carried out by O.I. Kudrin (Pulsed jet nozzle with addition of extra mass, Kudrin O.I., MAI Works, 1958, Issue No. 97) demonstrated that, even the above losses in place, the joined jet mass has a considerably higher kinetic energy than that of the active jet. During an experiment held on a test bench, a growth of reactive thrust of up to 140 % compared to the initial value was reached with atmospheric air ejected by the pulsed active jet of combustion products. The actual value of the growth depends on geometry of the ejector shroud, change of jet mass achieved through addition, and speed of this mass flowing out. With ***w_{OM} ≥*** 1, the growth of kinetic energy of jet mass ≥ exceeds the growth of thrust. To obtain a thrust growth with a factor of 2.4, with ***w_{OM}*** reduced (which is achieved here by reducing the out flowing speed of the "tail" part of the mass of combustion product pulses), the value of the air mass being added should be equal to **2.4 *mn,*** where ***n*** is a factor for reduction of ***C_{AC}*** and ***C_{OM}*** during partial mixing of combustion products with the air added. To ensure a growth of the kinetic energy of the joined jet mass **(*E_{KOM} =*** [(*1* + ***m*) *C²_{OM}***]/*2*) equal to the growth of thrust, with ***w_{OM}*** smaller than 1 ***(C_{OM}*** 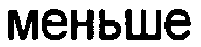 ***C_{PM}***), it is necessary to have addition ratio ***m*** made ***n²*** times higher. In other words, to provide a 2.4-fold growth of kinetic energy, with ***C_{OM}*** made, say, twice smaller compared to ***C_{PC}*** (this would be a considerable value, even for parallel addition), the joined jet mass should (due to addition of extra air masses) be made 2.4 ***m2² =*** 9.6 times higher. Here, ***m*** observed experimentally ≥ 10, therefore, in this case, the growth of kinetic energy of the joined mass is also higher than the growth of thrust.

So, it is quite clear that, even with a possible decrease of ***w_{OM},* (*E_{KOM} =*** [(*1* +2.4***mn²***) (***C_{OM}*/*n***)²]**/*2*)** is much higher than the kinetic energy of the active jet ***E_{KAC}=C²_{AC}* /*2*** (here, the active jet consists of combustion products), and most of the power is obtained in the proposed method through converting potential energy and low-grade heat of atmospheric gases compressed under gravitation into kinetic energy of air mass. Moreover, the energy obtained is used for doing mechanical work without being dispersed in the atmosphere, as it is the case with the reactive thrust propulsion created. Therefore, the jet engine used for implementation of this method may be referred to combined atmospheric engines, and its efficiency may be estimated through the total ***efficiency ratio,*** which is equal to the ***efficiency ratio*** of the Carnot cycle increased by the product of ***m*** and ***w_{OM}.***

However, in these engines (like in heat engines), the used joined mass containing toxic materials is emitted into the atmosphere, with a part of heat produced from fuel combustion dispersed, doing no useful work.

Technical objective of the invention is to create a method for converting low-grade energy of environment in fuelless jet power plants and engines *(where compressed gases instead of combustion products are used* as *the working medium in process of successive addition)* for the purpose of raising ecological compatibility and specific power, as well as expanding the scope of their application.

Technical result ensuring solution of the set objective in terms of the method for converting low-grade energy involves: converting energy of external gaseous masses (hereinafter meant as gaseous masses external relative to *ejector shrouds, i.e. adding devices of an ejector nozzle unit)* for obtaining power on the shaft without fuel combustion and generation of combustion products; raising efficiency of the process of successive addition of extra masses during emission of used joined mass into the environment and/or using it as added masses of the following cycles due to slowdown of the used joined mass in the diffuser; raising efficiency of the process of successive addition of extra masses and converting energy of the joined jet mass due to using the swirling effect; raising specific power and expanding the scope of application of the fuelless jet engine through increasing compression ratio of the used joined mass and difference of pressure potentials, with the working medium being expanded.

Essence of invention in terms of the method for converting low-grade energy involves: a method for converting energy, where, due to kinetic energy of the gaseous mass of at least one pulsed jet (formed by the working medium flowing out of the jet device into the adding device of an ejector nozzle unit of jet engine and functioning as an active jet in process of successive addition of extra masses), in each cycle between the gaseous mass of the active jet pulses, the added gaseous mass is accelerated; kinetic energy of the obtained joined jet mass is used for creating a moment of rotation on the power shaft, with the working medium constituted by external gaseous masses, which (before being fed to the jet device for generating the active jet) are compressed in a compressor up to a calculated level of pressure sufficient to create (in the adding device) rarefaction following the gaseous mass of the active jet pulses, providing emergence of an unbalanced force of pressure of external gaseous masses, and converting their potential and thermal energy into kinetic energy of the added gaseous mass; where the compressor is driven due to a part of power obtained on the power shaft of the fuelless jet engine as a result of converting the energy of external gaseous masses over the previous cycles.

Power is obtained on the power shaft through acting (with a thrust of external gaseous mass flowing into the adding device following the gaseous mass of the active jet pulses) on blades of at least a one-staged turbine located upstream relative to the jet device, and/or acting on blades of at least a one-staged turbine with a jet of joined jet mass formed in the adding device in process of successive addition.

Jets of the joined jet mass flowing out of the turbine blades are swirled in a spiral, their kinetic energy (remaining after obtaining a moment on the power shaft) used for creating the swirling effect within the swirling chamber, where flowing takes place, and for obtaining rarefaction in its central part for increasing the pressure potential difference in process of successive addition (with the working medium expanding) and, accordingly, for increasing kinetic energy of the gaseous mass of the active jet pulses and degree of the following rarefaction, which raise the speed of the joined jet mass and the moment on the power shaft; at the same time, in the peripheral part of the whirl, pressure of the joined mass (directed to blades of the next stage of the turbine to generate an extra moment) also increases.

Jets of the joined jet mass flowing from blades of the turbine are directed to a centrifugal diffuser, where kinetic energy (remaining after obtaining the moment) is converted into the potential one, with pressure of the used mass increased up to the level required for discharge into the environment and/or reuse as added masses in processes of successive addition of the following cycles in adding devices of the same and/or a succession of other ejector nozzle units, where it is successively cooled down to a low-temperature level required to external consumers, and/or in operation of a fuelless jet engine in a closed cycle for a calculated increase of temperature difference of environment and used joined mass before the latter's being heated in a heat-exchange device.

The used mass is compressed in the compressor owing to a part of the power obtained as a result of processes of converting energy of external gaseous masses in the previous cycles, up to a pressure required for exhaustion into the environment with an increased pressure and/or reuse as added masses, as well as for an additional increase of pressure potential difference, with the pulsed active jet flowing out of the jet device, which is achieved due to rarefaction in front of the inlet of the compressor taking place upon the used mass being compressed.

The used mass is compressed in the compressor owing to a part of the power obtained as a result of processes of converting energy of external gaseous masses in the previous cycles, up to a pressure required for its further use as a working medium in processes of successive addition of extra masses of the following cycles in adding devices of ejector nozzle units of at least one fuelless jet engine and/or for creating propelling reactive thrust and/or doing other work related to expansion.

Technical result to ensure solving the set objective in terms of a fuelless jet engine for implementation of the method for converting low-grade energy is in reducing its linear dimensions and increasing its specific power.

Essence of invention in terms of a fuelless engine for implementation of the method for converting low-grade energy lies in the following: the jet engine comprises at least one ejector nozzle unit consisting of at least one jet device and an adding device, where the flow-through part of the adding device of the ejector nozzle unit and of at least one turbine fixed at the end of a hollow power shaft of the fuelless jet engine is inside a room confined along its perimeter with the internal surface of the shaft, with stages of at least one compressor located at its outside.

Along the perimeter of the outlet of the flow-through part of the turbine, which provides for driving the power shaft due to kinetic energy of the joined jet mass acting upon its blades, there is a centrifugal diffuser, its outlet connected via pneumatic valves, through channels, to the environment and/or inlets of the compressor and the adding device.

Along the perimeter of the flow-through part of the turbine, which provides for driving the power shaft due to kinetic energy of the joined jet mass, there is a guiding unit for swirling in a spiral the joined mass flowing out of the turbine, its outlet directed into the swirling chamber for generation of rotating swirling flows of the joined mass.

In the peripheral part of the swirling chamber, there is the inlet of the guiding unit, its outlet directed to the blades of the second stage of the turbine, the first stage of which is driven owing to kinetic energy of the joined jet mass.

The central part of the swirling chamber and the outlet of the blades of the second stage of the turbine are connected, via the guiding unit, to the inlet of the compressor fixed on the power shaft.

The outlet of the compressor fixed on the power shaft is connected via pneumatic valves, through channels, to the environment and/or the inlet of the adding device and the pneumatic accumulator of compressed working medium.

Along the perimeter of the flow-through part of the turbine driving the power shaft due to kinetic energy of the added masses flowing into the adding device, there is the outlet of the flow-through part of the turbine, which is driven by the same energy, yet is not fixed on the power shaft, and drives the rotor of at least one stage of the compressor, rotating it in the direction opposite to rotation of the other stages of this compressor, their rotor being fixed on the power shaft.

### LIST OF DRAWINGS

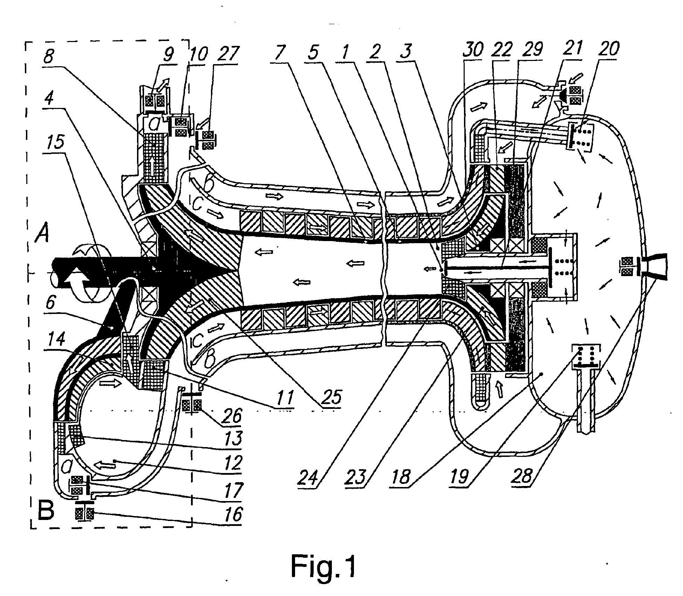

*Fig.1* presents the schematic diagram of a fuelless jet engine, which demonstrates its structure, as well as the method for converting low-grade energy implemented in this engine.

The drawing contains conventions corresponding to the following engine components:
Jet device *1* for generating the jet mass of the active jet pulses; adding device 2 of the ejector nozzle unit; first turbine 3 of the power shaft; second turbine 4 of the power shaft; power shaft 5; centrifugal compressor 6 located on the power shaft; axial compressor 7 located on the power shaft; centrifugal diffuser 8; exhaust pneumatic valve *9;* pneumatic valve *10;* guiding unit *11* for swirling the joined jet mass in a spiral; swirling chamber *12;* guiding unit *13* at the inlet of the second stage of turbine *4;* blades *14* of the second stage of turbine *4;* guiding unit 15 connecting the outlet of the swirling chamber and blades *14* of the second turbine 4 to the inlet of compressor *6;* exhaust pneumatic valve *16;* pneumatic valve *17;* pneumatic accumulator *18* of the working medium; check valve *19* for feeding the working medium compressed by external devices; check valve 20 for feeding the working medium compressed in the jet engine compressor; electromagnetic valve 21 for feeding the working medium; turbine blades - guiding unit 22 at the inlet of turbine 3; turbine blades 23 of turbine 3; guiding unit 24 at the outlet of turbine 3; turbine blades 25 of turbine 4; inlet valves 26, 27; jet nozzle 28; turbine 29 not fixed on the power shaft; compressor 30, not connected kinematically to the power shaft.

### DESCRIPTION OF THE PRINCIPAL INVENTION EMBODIMENTS

The proposed method for converting low-grade energy will be considered by the example of a fuelless jet engine *(Fig. 1*), which comprises an ejector nozzle unit consisting of jet device *1,* e.g. a narrowing jet nozzle, and adding device 2. The flow-through part of this device, as well as of turbines 3 and 4 fixed at the ends of hollow shaft 5 is inside a room confined along its perimeter with the internal surface of this shaft. On the outside of shaft 5 there are rotors of compressors 6, 7.

In an embodiment of the method (in *Fig. 1* it is shown in a dotted line and marked as A), along the perimeter of the outlet of the flow-through part of turbine 4, there is centrifugal diffuser *8,* its outlet communicating through channels ***a, b*** and ***c*** via pneumatic valves *9* and *10* with the environment and/or inlets of compressor 7 and adding device 2.

In another embodiment (in *Fig. 1*) it is shown in a dotted line and marked as *B*), along the perimeter of the outlet of the flow-through part of turbine 4, there is guiding unit *11* for swirling in a spiral the joined mass flowing out of turbine 4, its outlet directed into swirling chamber 12, where rotating swirling flows of the joined mass are generated. In the peripheral part of swirling chamber *12,* there is an inlet of guiding unit *13,* its outlet directed to blades *14* of the second stage of turbine *4.* The central part of swirling chamber *12* and the outlet of blades *14* of the second stage of turbine 4 are connected via guiding unit 15 to the inlet of compressor 6 fixed on shaft 5. The outlet of compressor 6 is connected via pneumatic valves *16,17* through channels ***a, b*** and ***c*** with the environment and/or inlets of compressor 7 and adding device 2.

To set the above engine in operation, it is necessary to create pressure of working medium (e.g. air) in pneumatic accumulator 18. The compressed air is fed through check valve 19 and/or 20. On the calculated pressure level being reached, valve 21 is switched in use, which provides a calculated duration of flowing of compressed air out of the jet nozzle with a preset periodicity. With the air expanding, and with the air mass of the active jet pulse accelerating in adding device 2, rarefaction is generated required for atmospheric air to follow, this atmospheric air accelerating following the air mass of the active jet pulse, flowing into adding device 2 through turbine blades - guiding unit 22, the flow-through part of turbine 3 formed by blades 23 connecting its rotor to the internal part of shaft 5, and guiding unit 24. Geometry of the jet nozzle and adding device 2, their relation and thermodynamic parameters of the jet mass of the active jet pulses determine the degree of rarefaction and the period, over which this rarefaction is maintained. This, in its turn, determines the amount of the added atmospheric air, its speed and, accordingly, the total pressure exerted by the inflowing atmospheric mass on blades 23 of turbine 3 and that of the joined jet mass on blades 25 of turbine 4, which creates a moment on shaft 5. The power obtained is intended to be used by external consumers, and for driving devices and mechanisms of the engine.

Replacement of the working medium (combustion products flowing out of the periodic combustion chamber) with compressed air involved in the proposed method makes it possible to eliminate processes of filling, combustion and blowing (which would otherwise take some time of the cycle), and extend the range of possible calculated frequencies of the active jet, their duration and, accordingly, the range of thermodynamic parameters for optimization of the process of addition, as well as for controlling the power obtained. Besides, at the time of flowing out of the jet nozzle, the pressure of the compressed air in pneumatic accumulator *18* and in front of the throat of the nozzle remains constant throughout the cycle, therefore, the "tail" part of the gaseous mass of the active jet pulses (which reduces efficiency of the process of successive addition, with combustion products used as the working medium) is absent. This virtually excludes mixing of successively moving separated air masses and, accordingly, losses owing to their friction. In view of this, the value of ***w_{OM}*** in this process of addition **≥** 1, and available kinetic energy of the joined jet mass obtained in it - ***E******_{KOM}**=*[(***m** +1*)***C²_{OM}***]/*2*) exceeds available kinetic energy of the active jet - ***E_{KAC}=C²_{AC}*/*2*** with a factor in proportion to ***m.*** Here, its value is larger than the one observed in process of addition to the active jet containing combustion products, and may vary within the range of 10 to 50, depending on calculated parameters; accordingly, the value of ***E_{KOM}*** will be tens of times as large as ***E_{KAC}*** With such energy growth achieved as a result of the addition process, to compress the working medium forming the active jet pulses, it is quite possible to use power obtained as a result of converting (in the turbine) available kinetic energy of the joined air mass, after the latter has accelerated in each cycle of the addition process, i.e. carry out conversion of atmospheric energy into mechanical work using the energy obtained in the previous cycles. Here, the process of mechanical compression can be implemented in compressors 6, 7 located on shaft 5. Total power inputs and losses in processes of conversion of atmospheric energy ***E_{ZAT}*** will be: ***E_{ZAT} =E******_{ZCB}** + **E_{PK} + E_{PT} + E_{PR},***
where ***E_{ZCB} -*** are power inputs required for compressing the air forming the active jet during expansion in process of addition; ***E_{PK}*** are energy losses during compression (in the compressor); ***E_{PT}*** are energy losses in the turbine during conversion of ***E_{KOM}*** into mechanical work; ***E_{PR} -*** are other losses.

Here, ***E_{ZCB} = E_{KAC},*** and the total share of process losses ***E_{PK} + E******_{PT}** + **E_{PR}*** will not exceed 25% of ***E_{KAC},*** including: ***E_{PK} ≈*** 20% of ***E_{ZCB}, E_{PT} ≈*** 15% of ***E_{KOM}, E_{PR}* ≈** 2% of ***E_{KOM}.*** The value of losses mostly depends on efficiency of the process of converting energy in the turbine, and the specific value of losses in the compressor, as well as other losses (such as cooling down following compression, at expansion in nozzles), with large values of ***m*** is insignificant and is equal to 1% and 0.1 %, respectively, of ***E_{KOM},*** increasing with ***m*** going down.

In view of all the power inputs, the energy available for consumption ***E_{POT}*** will be: ***E_{POT}=E_{KOM}-E_{ZAT}*.**

If we assume that ***E_{KOM}*** 100%, with average values of ***m*** = 20 and ***W_{OM}=*** 1, ***E_{POT}*** = 100% - (5% + 1% + 15%+ 0.1%) = 78.9% of ***E******_{KOM}**.* As for the value of ***E_{ZAT}*** required for the process of converting atmospheric energy into mechanical work to take place, in this case, it will be 21.1% of ***E_{KOM}.*** With the main parameters of the process and their relations deviating from their optimal values, factors ***m*** and ***w_{OM}*** will be reduced. To generate the minimum power required for keeping this process self-sustainable, ***E_{KOM}*** obtained as a result of addition of air masses should be increased by the value just needed to compensate process losses, and will in this case be equal to the value of ***E_{ZAT}.*** To ensure this growth, it is sufficient to increase kinetic energy of the jet mass in process of addition by 44%, i.e. ***E_{KOM}*** should be just **1.44** times as high as ***E_{KAC}.*** The rest of the energy obtained may be entirely used by external consumers. Thus, with ***m*** = 1 (which is very low for the process of successive addition), where specific weight of power inputs required for air compression ***E_{ZCB}*** will increase to 50% of the value achieved in this case by ***E_{KOM}*** (with the previously assumed specific weight of process losses remaining unchanged), ***E******_{POT}** =* 100% - (50% + 10% + 15% + 1%) = 24% *of **E_{KOM}.*** Even with such a negligible (2-fold) increase of kinetic energy in process of addition, and low ***efficiency ratios*** of the turbine (0.85) and compressor (0.8), it is possible to convert atmospheric energy using the energy obtained as a result of its conversion over the previous cycles, which leaves to consumers 24% of the available ***E_{KOM}.***

If we now extrapolate the results of raising kinetic energy (with a factor of 2.4) obtained experimentally by O.I. Kudrin in process of successive addition, with an active jet made of combustion products, to a more efficient process using compressed air for formation of the above-mentioned jet, some of the energy to be left to external consumers after the necessary inputs for compression and energy losses (in the turbine, compressor, etc.) in processes of conversion will be ***E_{POT}*** - 100% - (41.7% + 8.3% + 15% + 0.8%) = 34.2% of the achieved ***E_{KOM}.*** Therefore, the results of the experiment, along with analysis of the energy balance of the proposed method, confirm possibility of converting the energy of atmosphere in process of successive addition, owing to the energy obtained as a result of its conversion over the previous cycles, with no additional energy required. Here, to launch the process of successive addition of extra masses, it is possible to use the air compressed due to a part of the power obtained as a result of conversion of ***E_{POT}*** and accumulated in the pneumatic accumulator.

Therefore, the energy of atmospheric gases being in equilibrium may be converted into kinetic energy of the air jet mass, without burning fuel, and with no external high-grade thermal energy (generated through other technologies) brought to the working medium, to have specific power comparable to that of heat engines.

The process of successive addition in the fuelless method for converting the atmospheric energy consists of two interdependent successive and recurrent thermodynamic cycles: a reverse Carnot cycle (the cycle of the air heat pump - refrigerating machine) and a cycle of accelerating additional masses under the effect of atmospheric pressure. Here, owing to some of the mechanical work obtained as a result of converting the energy of atmosphere, the atmospheric air is compressed in the reverse Carnot cycle, with conditions for beginning the second cycle created due to the work of expanding the compressed air. It has to be noted that here (like in the case of heat engines) the proposed method for converting energy allows using open cycles, where the used joined mass of low temperature is eventually emitted into the atmosphere (in the example presented - through open valves 9, 16) and is replaced with air of atmospheric temperature (coming through valve 26 via channel 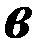 to the inlet of adding device 2 (to be used as added masses of the following cycles) and via channel C to be compressed in compressor 7 and used as the working medium after coming through pneumatic valve 20 to pneumatic accumulator 18). However, in this particular case, it is unnecessary to bring high-potential heat to the working medium (with oxygen consumed and toxic substances emitted into the atmosphere), as the required work of expansion is carried out owing to prior mechanical compression of the working medium, and the main source of energy (for carrying out the process of successive addition to result in the joined jet mass doing the work), along with low-grade thermal energy accumulated by atmospheric gases, is gravitation creating atmospheric pressure. Therefore, the device used for implementation of the proposed method for converting energy using open cycles may be related to atmospheric fuelless (gravitational) jet engines. In atmospheric conditions, these engines may be used in various stationary and mobile systems, e.g. for generating power in power plants and/or for creating propulsion drives of vehicles. Advantages of these engines, compared to other converters of "free" energy (wind, solar, geothermal, etc.) are their higher specific power, as well as independence of geographical, time and weather conditions. The technology of manufacturing these engines is less complicated than that of traditional gas-turbine engines: there are no systems of storage, feeding, carburetion and combustion; besides, no thermal-resistant materials are used.

The proposed method for converting low-grade energy for obtaining power may also be implemented out of atmospheric conditions, by using the closed thermodynamic cycle with external heat application, without replacing the working medium or added masses. Assume there is a fuelless jet engine put into a chamber isolated from environment, which is filled with gas, e.g. air or helium. With the engine working according to the above-described scheme, temperature and pressure in this engine will go down (due to cooling down of the used joined mass) to the level, at which parameters of the process of addition will change to such an extent that ***E_{KOM}*** obtained as a result of the process will not be enough to create calculated power of compressor used for compressing the working medium before it is to be expanded. As each of the subsequent cycles will see its compression ratio (and accordingly - ***C_{AC}***) reduced, the process of addition will gradually subside. As a result, the engine will be "frozen" and eventually stop.

This will not be the case, if the chamber receiving the used joined mass is combined with a heat-exchange device (not shown in *Fig. 1*), e.g. through valve 9 or 16, with the other end of the device communicating through valve 26 or 27 via channel 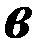 to the inlet of adding device 2, and via channel ***c -*** to the inlet of compressor 7, which would form a closed circuit. Here, some of the joined mass used over the previous cycles will be directed to the heat-exchange device (under the effect of unbalanced force of gas pressure accompanying creation of rarefaction in the gaseous mass of the active jet pulses moving in the shroud). In the heat-exchange device, while receiving heat and lowering the ambient temperature, it will warm up to the calculated temperature before doing functions of the added masses of the following cycles. At the same time, under the effect of rarefaction obtained at the inlet of compressor 7, the calculated part of the used joined mass is directed through the heat-exchange device (or by-passing it through valves *10* or *17*) to compressor *7,* and then - through check valve *20* to pneumatic accumulator *18* to be used in the following cycles as the working medium.

Therefore, by using low-grade heat of the environment for heating the joined mass (used in the previous cycles) in the heat-exchange device, it is possible to carry out the process of adding extra masses out of atmospheric conditions to generate power on the shaft of air-independent fuelless jet engines with a closed cycle as long as required, irrespective of the value of pressure of environment created by gravitation. Besides, by using parameters of the process through changing temperature of heating the used joined mass in the heat-exchange device, degree of rarefaction in the chamber for its flowing out, as well as compression ratio before its being added and used as the working medium, it is possible to extend the range of control over their power. The high-potential heat obtained through compression of the working medium may be diverted via an additional heat-exchange device (not shown in *Fig. 1*) to be used by consumers. Based on this method, it is possible to create autonomous air-independent fuelless power systems of various purposes and power ranges, which operate in different ambient conditions (e.g. under water, using its heat for generating power). Apart from water basins, it is also possible to use ice, low-temperature atmospheric air and other sources of low-grade heat as sources of thermal energy. By changing thermodynamic parameters of sources used, it is possible to control their aggregative state and change climatic conditions locally, to an extent determined by the scale of application of fuelless technologies.

Efficiency of the process of successive addition of extra masses may be raised owing to creation of additional rarefaction in the zone of out-flowing of the joined jet mass. To this effect, the jets flowing out of blades 25 of turbine 4 via guiding unit 11 are swirled in a spiral. Here, kinetic energy of the jets remaining after blades 25 have been affected is used for creating the swirling effect in swirling chamber 12 receiving the out-flowing jets, and rarefaction formed because of it in the central part of the chamber, increasing the difference of pressure potentials, with the working medium expanding in process of successive addition, and, accordingly, kinetic energy of the gaseous mass of the active jet pulses and degree of rarefaction to follow in process of the successive addition, as a result, increasing the joined jet mass, its speed and moment on shaft 5. What can be observed at the same time is an increase of pressure of the joined mass being directed from this part via guiding unit 13 to blades *14* of the next stage of turbine 4, also to generate an extra moment.

To simplify the design of the fuelless jet engine, and to raise efficiency of the process of successive addition, with the moment generated on shaft 5, the joined jet mass is directed to centrifugal diffuser 8, where its remaining kinetic energy (blades 25 having been affected) is converted into the potential one, with pressure at the outlet of the diffuser increased up to the level required for the used mass to be discharged into the environment and/or be reused as added masses in process of successive addition of extra masses of the following cycles in adding device 2 of the same or a number of other ejector nozzle units (not shown in *Fig.1*), where this mass is cooled down with a gradual decrease of temperature to a low-temperature level required to consumers for operating the engine with an open cycle, and/or in operation with a closed cycle for raising the temperature difference of the environment and the used joined mass, before the latter is warmed up in a heat-exchange device, and external heat sources of a lower temperature may be used.

The used mass can be compressed in compressor 6 owing to a part of the power obtained as a result of processes of converting energy of external gaseous masses in the previous cycles up to the pressure required for this mass to be exhausted through exhaust pneumatic valve 16 into an environment with high pressure and/or in its being fed through pneumatic valve *17* via channels ***b*** and ***c*** to be reused. Rarefaction generated at the inlet of the compressor in process of compression results in an increase of the pressure potential difference (at the pulsed active jet flowing out of the jet device) and, accordingly, its speed and the speed of the joined jet mass, accompanied by a proportionate increase of moment and reduction of temperature.

After compressing the used mass in compressors 6, 7, 30 owing to some of the power obtained as a result of converting the energy of gaseous masses in the previous cycles up to the required pressure, this mass can be used as a working medium in processes of successive addition of extra masses in adding devices of this and other ejector nozzle units (not shown in *Fig.1*) of this or other fuelless jet engines. The compressed used mass may be reused for generating reactive thrust of propulsive devices, e.g. by being expanded in jet nozzle 28, or for doing other work related to expansion.

It is possible to raise efficiency of the process of compressing the used mass and specific power of the fuelless jet engine by carrying out compression with birotating compressors with impellers rotating in opposite directions, with no stationary guiding units used. To this effect, there is outlet of blades 22 of turbine 29 located along the inlet of the flow-through part of turbine 3 driving shaft 5 owing to kinematic energy of the added masses flowing into the adding device. It is also driven owing to energy of the added masses, yet it is not fixed on shaft 5 and drives the rotor of the axial and centrifugal stages of compressor 30 by rotating them in the direction opposite to rotation of the other stages of the rotor of compressor 6 fixed on shaft 5.

## Claims

1. Method for converting energy, where, owing to kinetic energy of gaseous mass of at least one pulsed jet (formed by a working medium flowing out of the jet device into the adding device of an ejector nozzle unit of a jet engine, and acting as an active jet in process of successive addition of extra masses), in each cycle between the gaseous mass of the active jet pulses, the added gaseous mass is accelerated, and kinetic energy of the obtained joined jet mass is used for creating a moment of rotation on the power shaft, **characterized in that** the working medium is presented by external gaseous masses, which before being fed to the jet device for forming an active jet are compressed in a compressor to the calculated level of pressure sufficient for creating rarefaction in the adding device, following the gaseous mass of the active jet pulses, which would ensure emergence of an unbalanced force of pressure of external gaseous masses and converting their potential and thermal energy into kinetic energy of the added gaseous masses, where the compressor is driven owing to a part of power obtained on the power shaft of the fuelless jet engine as a result of converting energy of external gaseous masses over the previous cycles.

2. Method according to claim 1, **characterized in that** the power is obtained on the power shaft through acting with the thrust of external gaseous mass flowing into the adding device following the gaseous mass of the active jet pulses on the blades of at least a one-staged turbine located upstream relative to the jet device, and/or acting on the blades of at least a one-staged turbine with a jet of the joined jet mass formed in the adding device.

3. Method according to any of claims 1, 2, **characterized in that** the jets of the joined jet mass flowing out of the blades of the turbine are swirled in a spiral, with their kinetic energy, remaining after obtaining a moment on the power shaft, used for creating the swirling effect in the swirling chamber receiving the flowing mass, and for creating rarefaction in its central part for increasing the pressure potential difference in process of successive addition, with the working medium expanding, and accordingly - for increasing kinetic energy of the gaseous mass of the active jet pulses and degree of rarefaction to follow, which raise the speed of the joined jet mass and the moment on the power shaft; what is observed at the same time in the peripheral part of the swirl is an increase of pressure of the joined mass, which is directed from this part to the blades of the next stage of the turbine, also for creating an extra moment.

4. Method according to any of claims 1 - 3, **characterized in that** the jets of the joined jet mass flowing out of the blades of the turbine are directed into a centrifugal diffuser, in which their kinetic energy, remaining after obtaining the moment, is converted into the potential one, with pressure of the used mass increased to the level required for it to be discharged into the environment and/or reused in processes of successive addition as added masses of the following cycles in the adding devices of this and/or, successively, a number of other ejector nozzle units, where it is successively cooled down to the low-temperature level required to external consumers and/or for operating the fuelless jet engine in a closed cycle for the calculated increase of the temperature difference of the environment and the used joined mass, before the latter is warmed up in a heat-exchange device.

5. Method according to any of claims 1 - 4, **characterized in that** the used mass is compressed in a compressor owing to a part of power obtained as a result of processes of converting energy of external gaseous masses over the previous cycles up to the pressure required for it to be exhausted into the environment with high pressure and/or for and additional increase of the pressure potential difference, with the active pulsed jet flowing out of the jet device, obtained due to rarefaction at the inlet of compressor generated with the used mass being compressed.

6. Method according to any of claims 1 - 5, **characterized in that** the used mass is compressed in a compressor owing to a part of power obtained as a result of processes of converting energy of external gaseous masses in the previous cycles up to the pressure required for its further use as the working medium in processes of successive addition of extra masses in adding devices of ejector nozzle units of at least one fuelless jet engine and/or for creating reactive thrust of propulsion devices and/or doing other work related to expansion.

7. Jet engine comprising at least one ejector nozzle unit consisting of at least one jet device and an adding device, **characterized in that** the flow-through part of the adding device of the ejector nozzle unit and of at least one turbine fixed at the end of the fuelless jet engine is located inside the room confined along its perimeter with the internal surface of this shaft, with stages of the rotor of at least one compressor being at its outside.

8. Fuelless jet engine according to claim 7, **characterized in that**, along the perimeter of the outlet of the flow-through part of the turbine, which drives the power shaft owing to kinetic energy of the joined jet mass acting on its blades, there is a centrifugal diffuser, its outlet communicating via through pneumatic valves via channels with the environment and/or inlets of the compressor and the adding device.

9. Fuelless jet engine according to claims 7, 8, **characterized in that**, along the perimeter of the outlet of the flow-through part of the turbine, which drives the power shaft owing to kinetic energy of the joined jet mass acting on its blades, there is a guiding unit for swirling in a spiral the joined mass flowing out of this turbine, its outlet directed into the swirling chamber for creation of rotating swirling flows of the joined mass.

10. Fuelless jet engine according to claims 7 - 9, **characterized in that**, in the peripheral part of the swirling chamber there is the inlet of the guiding unit, its outlet directed at the blades of the second stage of the turbine, its first stage driven owing to kinetic energy of the joined jet mass.

11. Fuelless jet engine according to claims 7 -10, **characterized in that** the central part of the swirling chamber and the outlet of the blades of the second stage of the turbine are connected via the guiding unit to the inlet of the compressor fixed on the power shaft.

12. Fuelless jet engine according to claims 7-11, **characterized in that** the outlet of the compressor fixed on the power shaft is connected through pneumatic valves via channels to the environment and/or the inlet of the adding device and the pneumatic accumulator of the compressed working medium.

13. Fuelless jet engine according to claims 7 -12, **characterized in that**, along the perimeter of the inlet of the flow-through part of the turbine driving the power shaft owing to kinetic energy of the added masses flowing into the adding device, there is the outlet of the flow-through part of the turbine, which is driven by the same energy, yet is not fixed on the power shaft and drives the rotor of at least one stage of the compressor, rotating it in the direction opposite to rotation of the other stages of the same compressor, their rotor being fixed on the power shaft.
